(19) Europäisches Patentamt
European Patent Office
Office européen des brevets

(11) Veröffentlichungsnummer: **0 146 083**
**B1**

(12) **EUROPÄISCHE PATENTSCHRIFT**

(45) Veröffentlichungstag der Patentschrift: **14.03.90**

(51) Int. Cl.⁵: **B 01 D 53/14**

(21) Anmeldenummer: **84114838.0**

(22) Anmeldetag: **06.12.84**

# (54) Verfahren und Vorrichtung zur Entfernung von SO2 aus Rauchgasen.

(30) Priorität: **13.12.83 DE 3345056**

(43) Veröffentlichungstag der Anmeldung: **26.06.85 Patentblatt 85/26**

(45) Bekanntmachung des Hinweises auf die Patenterteilung: **14.03.90 Patentblatt 90/11**

(84) Benannte Vertragsstaaten: **AT BE DE FR GB IT NL**

(56) Entgegenhaltungen:
**EP-A-0 011 228**
**EP-A-0 023 550**
**DE-A-2 310 410**
**FR-A-2 287 937**
**US-A-3 831 348**

(73) Patentinhaber: **Linde Aktiengesellschaft**
**Abraham-Lincoln-Strasse 21**
**D-6200 Wiesbaden (DE)**

(72) Erfinder: **Kristof, Wolfgang, Dr. rer. nat.**
**Herzog-Ludwig-Strasse 14a**
**D-8223 Trostberg (DE)**
Erfinder: **Baur, Karl, Dr. rer. nat.**
**Forstenrieder Weg**
**D-8021 Baierbrunn (DE)**

(74) Vertreter: **Schaefer, Gerhard, Dr.**
**Linde Aktiengesellschaft Zentrale Patentabteilung**
**D-8023 Höllriegelskreuth (DE)**

**EP 0 146 083 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren zur Entfernung von $SO_2$ aus Rauchgasen durch Wäsche mit einem physikalisch wirkenden Lösungsmittel, dem eine aromatische Verbindung augesetzt wird und das nach Aufnahme von $SO_2$ einer Regenerierung unterzogen und in die Wäsche zurückgeführt wird, sowie eine Vorrichtung zur Durchführung des Verfahrens.

Das Problem der Entfernung unerwünschter gasförmiger Bestandteile, insbesondere $SO_2$ aus Rauchgasen gewinnt zunehmend an Aktualität. Die Entfernung von $SO_2$ wird sowohl mittels chemisch als acuh physikalisch wirkenden Lösungsmitteln durchgeführt. Als chemisch wirksame Lösungsmittel kommen dabei insbesondere solche mit Alkali- oder Erdalkaliverbindungen als wesentliche Bestandteile in Betracht. Als Reaktionsprodukt ergeben sich die jeweils entsprechenden Hydrogenverbindungen.

Als physikalisch wirkendes Lösungsmittel wird z.B. Dimethylformamid gemäß EP—A—0 011228 vorgeschlagen.

Im Dimethylformamid findet dabei eine langsame aber kontinuierliche Anreicherung von Schwefelsäure statt, die durch Oxidation von Schwefeldioxid au Schwefeltrioxid in Anwesenheit von Wasser oder aus im Rauchgas enthaltenem Schwefeltrioxid und Wasser entsteht. Die Schwefelsäureanreicherung muß wegen der Korrosionsgefahr soweit wie möglich verhindert werden. Dies geschicht in dem bekannten Verfahren beispielsweise, indem das Dimethylformamid destillativ von der Schwefelsäure abgetrennt wird. Lediglich restliches Dimethylformamid wird aus der destillativ aufkonzentrierten Schwefelsäure durch Extraktion mit einem mit Schwefelsäure nicht mischbaren Lösungsmittel beispielsweise einem polaren organischen Lösungsmittel wie z.B. Toluol, entfernt. Reicht die Konzentration der Schwefelsäure zur Bildung zweier Phasen nicht aus, so kann die Extraktion in Anwesenheit von Wasser durchgeführt werden.

Bei Verwendung von beispielsweise Polyethylenglykolen bzw. Polyethylenglykolethern als physikalisch wirkenden Lösungsmitteln führt die Schwefelsäure zur Zersetzung des Lösungsmittels und muß aus diesem Grunde ausgeschleust werden.

Der Erfindung liegt daher die Aufgabe zugrunde, ein Verfahren und eine Vorrichtung zur Durchführung des Verfahrens der eingangs genannten Art so auszugestalten, daß auf einfache Art eine Anreicherung von Schwefelsäure im Lösungsmittel vermieden wird.

Diese Aufgabe wird erfindungsgemäß dadurch gelöst, daß dem Lösungsmittel vor der Wäsche die aromatische Verbindung zugesetzt wird, wonach das Lösungsmittel regeneriert und von dem regenerierten Lösungsmittel eine sich durch die Zugabe der aromatischen Verbindung ausbildende Schwefelsäure enthaltende Phase abgetrennt wird.

Untersuchungen haben gezeigt, daß die gebildete Schwefelsäure die Tendenz hat, zusammen mit Wasser und Salzresten (z.B. als Folge von Korrosion an der Anlage) eine gesonderte Phase zu bilden, die infolge ihrer höheren Dichte vom Lösungsmittel leicht abtrennbar ist. Dabei hat sich ergeben, daß dieser Effekt begünstigt wird, wenn dem Lösungsmittel eine aromatische Verbindung und hierbei insbesondere Verbindungen zugesetzt werden, die aus einem oder mehreren phenolischen Ringen, die mit Alkylgruppen und insbesondere Tertiär-Butylgruppen substituiert sein können, bestehen. Diese aromatischen Verbindungen werden üblicherweise als Oxidationsinhibitoren verwendet, doch hat sich überraschenderweise gezeigt, daß die Abbauprodukte dieser aromatischen Verbindungen eine ölartige Phase bilden, in der auch die Schwefelsäure vorhanden ist.

Mit der erfindungsgemäßen Verfahrensführung wird somit eine Erhöhung der Lebensdauer des Lösungsmittels, sowie eine Verringerung von Lösungsmittelverlusten erzielt, da keine Abschlämmung zur Entfernung von zersetztem Waschmittel mehr erforderlich ist. Überdies verringert sich die Werkstoffkorrosion, da die aggressive Schwefelsäure aus dem Lösungsmittel entfernt wird.

Mit Vorzug wird dem Lösungsmittel dabei die aromatische Verbindung in einer geringen Konzentration, insbesondere 0,3 bis 5 Gew.%, vorzugsweise 0,5 bis 1 Gew.%, zugesetzt.

Mit besonderem Vorteil wird die schwefelsäurehaltige Phase in einem Abscheider abgetrennt. In dem Abscheider scheidet sich infolge der dort herrschenden geringen Strömungsgeschwindigkeit und Turbulenz eine mit Schwefelsäure und Wasser stark angereicherte, ölartige Phase ab, die diskontinuierlich abgelassen werden kann.

Als Ergänzung zu dieser Verfahrenzweise oder wahlweise als vollwertige Alternative hierzu läßt sich die gebildete Schwefelsäure auch durch vorzugesweise diskontinuierliches Zuschalten eines handelzüblichen, schwach basischen Ionentauschers vollständig aus dem Lösungsmittel entfernen. Die schwach basischen Aminogruppen des Harzes reagieren hierbei gemäß

$$\text{Harz-NR}_2+H_2SO_4 \rightarrow (\text{Harz-NR}_2H)^+ + HSO_4^-$$

Nach vollständiger Beladung des Austauscherharzes mit Schwefelsäure erfolgt die Regenerierung mit z.B. wäßriger Natronlauge.

Die Erfindung bezieht sich überdies auf eine Vorrichtung zur Durchführung des Verfahrens mit einer Waschsäule mit einem Zulauf für regeneriertes und einem Ablauf für beladenes Lösungsmittel und mit einer über den Ablauf der Wachsäule verbundenen Regeneriersäule, deren Ableitung den Zulauf zur Waschsäule bildet. Diese Vorrichtung ist dadurch gekennzeichnet, daß in der Ableitung der Regeneriersäule ein Trennapparat zur Abscheidung der schwefelsäurehaltigen Phase installiert ist, von dem der Zulauf, in den eine Leitung, welche mit einem Vorratsbehälter

für eine konzentrierte Lösung der aromatischen Verbindung verbunden ist, mündet, zur Waschsäule führt. In weiterer Ausgestaltung der erfindungsgemäßen Vorrichtung ist außerdem der Trennapparat ein Abscheider und/oder ein Ionentauscher, der in der Ableitung der Regeneriersäule angeordnet ist. Der Abscheider ist dabei mit Vorteil als Kessel mit Trennsack ausgebildet.

Die Erfindung ist auf physikalisch wirkende Lösungsmittel, die zur Absorption von $SO_2$ aus Rauchgasen geeignet sind, anwendbar, wie z.B. auf Äthylenglykole und dessen längerkettige Homologe, wie Polyäthylenglykole, auf Äthylenglykoldialkyläther und deren längerkettige Homolge, wie Polyäthylenglykolalkyläther, und auf Dimethylformamid.

Im folgenden sei das erfindungsgemäße Verfahren anhand eines in zwei Figuren schematisch dargestellten Ausführungsbeispiels näher erläutert.

Es zeigen:

Figur 1 Verfahrensführung mit Abscheider und

Figur 2 Verfahrensführung mit Ionentauscher.

Über Leitung 1 tritt gemäß Figur 1 $SO_2$-haltiges Rauchgas in eine Waschsäule 2 ein. Die Waschsäule 2 wird in oberen Bereich mit regeneriertem Lösungsmittel aus Leitung 3 beaufschlagt, das im Gegenstrom zu dem aufsteigenden Rauchgas aus diesem das $SO_2$ absorbiert. Am Kopf der Waschsäule 2 wird daher gereinigtes Rauchgas über Leitung 4 abgezogen.

Das mit $SO_2$ beladene Lösungsmittel wird am Sumpf über Leitung 5 abgezogen, in einem Wärmetauscher 6 gegen regeneriertes Lösungsmittel angewärmt und einer Regeneriersäule 7 im oberen Bereich aufgegeben. Über eine Sumpfheizung 8 wird das im Lösungsmittel vorhandene $SO_2$ ausgetrieben und verläßt die Regeneriersäule 7 am Kopf über Leitung 9.

In dem von $SO_2$ befreiten Lösungsmittel, das über Leitung 10 vom Sumpf der Regeneriersäule abgezogen wird, sind nunmehr noch die gebildete Schwefelsäure sowie die als Oxidationsinhibitor zugesetzte aromatische Verbindung vorhanden, bzw. in geringer Konzentration deren Abbau- und Zersetzungsprodukte, die infolge der thermischen Bedingungen in der Strippsäule entstanden sind. Die aromatische Verbindung wurde dabei dem Lösungsmittel vor dessen Eintritt in die Waschsäule in gelöster Form über eine Leitung 11 aus einem Vorratsbehälter 12 zugesetzt. Die thermischen Abbauprodukte der aromatischen Verbindung bilden zusammen mit der durch Anwesenheit von $SO_2$, Wasser und Luftsauerstoff gebildeten Schwefelsäure eine ölartige Phase aus, welche sich vom Waschmittel abtrennt. Erfindungsgemäß wird daher das regenerierte Lösungsmittel nach Abkühlung im Wärmetauscher 6 einem Kessel 13 zugeführt, der einen Trennsack 14 aufweist. In diesem Trennsack kann ohne Schwierigkeiten die infolge der geringen Strömungsgeschwindigkeit und Turbulenz sich absetzende ölartige Phase höherer Dichte über Leitung 15 abgezogen werden. Das Ausschleusen der schwefelsäurehaltigen Phase erfolgt mit Vorteil diskontinuierlich über eine in Leitung 15 angeordnetes Ablaßventil 16. Das nunmehr vollständig regenerierte und von Schwefelsäure befreite Lösungsmittel wird über Leitung 3 in die Wäsche zurückgeführt.

Während des Betreibens einer Pilotanlage mit einer Gesamtmenge an Lösungsmittel für $SO_2$ von 55 Litern und einem mittleren $SO_2$-Gehalt des Einsatzgases von 0,5 Vol.% konnte diskontinuierlich eine Phase abgetrennt werden mit einem Schwefelsäuregehalt von 20 Gew.%. Der Schwefelsäuregehalt im $SO_2$-Lösungsmittel ließ sich hiermit konstant auf einem sehr niedrigen Niveau von 0,7 Gew.% halten.

Bei dem Ausführungsbeispiel gemäß Figur 2 ist anstelle eines Abscheiders ein Ionentauscher vorgesehen. Die in Bezug auf die Absorption bzw. Desorption von $SO_2$ wirksamen Verfahrensschritte entsprechend denen gemäß Figur 1 und werden daher nicht mehr erläutert.

Das von $SO_2$ befreite und im Wärmetauscher 6 abgekühlte Lösungsmittel in Leitung 10 wird zur Ausschleusung der Schwefelsäure über ein Ventil 17 einem Ionentauscher 18 zugeführt derein schwach basisches Harz aufweist. Das Harz belädt sich bei Überleiten des Lösungsmittels mit der Schwefelsäure, so daß über Leitung 19 mit Ventil 20 und Pumpe 21 schwefelsäurefreies Lösungsmittel abgezogen werden kann, das über Leitung 3 zurück in die Wäsche geführt wird.

Der Ionentauscher 18 ist über eine Leitung 22 mit Ventil 23 einerseits über Ventil 24 mit einem Wasserreservoir 25 und andererseits über Ventil 26 mit einem Behälter 27 für eine Alkalilauge, z.B. Natronlauge, verbunden. Von Leitung 23 zweigen überdies eine Leitung 28 mit Ventilen 29 und 30 sowie eine Leitung 31 mit Ventil 32 ab. Weiterhin ist an den Ionentauscher 18 eine Leitung 23 mit Ventil 34 angeschlossen.

Alle diese zusätzlichen Leitungen mit Ventilen dienen der Regenerierung des Ionentauschers, wenn dieser vollständig mit Schwefelsäure beladen ist. Diese Regenerierung wird wie folgt durchgeführt (die jeweils nicht erwähnten Ventile sind geschlossen):

Auslaufenlassen des Lösungsmittels aus dem Ionentauscherbett. Diese Maßnahme dient zur Minimierung der Lösungsmittelverluste (Ventil 20, 34 offen).

Nachspülen mit entionisiertem Wasser (Ventile 20, 24, 29, 30 offen).

Rückspülen mit entionisiertem Wasser (Ventile 23, 24, 34, offen).

Regenerieren mit wäßriger, 0,1 molarer Natronlauge (Ventile 23, 26, 34, offen).

Spülen mit entionisiertem Wasser, um Laugereste zu entfernen (Ventile 23, 24, 34, offen).

Auslaufenlassen des Wassers aus dem Ionentauscherbett (Ventile 32, 34, offen).

Erneute Beschickung mit Lösungsmittel (Ventile 17, 20, offen).

Zahlenbeispiel:

Während des Betriebes einer Pilotanlage zur Rauchgasentschwefelung mit 95% Wirkungsgrad

hatten sich nach vierwöchigen Betrieb bzw. nach Durchleiten von 20 000 $m^3$ eines Rauchgases mit ca. 1 Vol.% $SO_2$ 50 g Schwefelsäure im Lösungsmittel angereichert. Zur annähernd vollständigen Entfernung genügte das Zuschalten eines Ionentauscherbettes mit einem Schüttgewicht von 500 g über 6 Stunden im Bypaßbetrieb. Anschließend erfolgt die Regenerierung des Ionentauscherbettes wie oben beschrieben.

**Patentansprüche**

1. Verfahren zur Entfernung von $SO_2$ aus Rauchgasen durch Wäsche mit einem physikalisch wirkenden Lösungsmittel, dem eine aromatische Verbindung zugesetzt wird und das nach Aufnahme von $SO_2$ einer Regenerierung unterzogen und in die Wäsche zurückgeführt wird, dadurch gekennzeichnet, daß dem Lösungsmittel vor der Wäsche die aromatische Verbindung zugesetzt wird, wonach das Lösungsmittel regeneriert und von dem regenerierten Lösungsmittel eine sich durch die Zugabe der aromatischen Verbindung ausbildende Schwefelsäure enthaltende Phase abgetrennt wird.

2. Verfahren nach Anspruch 1, dadurch gekennzeichnet, daß als aromatische Verbindung eine aus einem oder mehreren phenolischen Ringen bestehende Substanz zugesetzt wird.

3. Verfahren nach Anspruch 2, dadurch gekennzeichnet, daß die Substanz mit Alkylgruppen substituiert wird.

4. Verfahren nach Anspruch 2 oder 3, dadurch gekennzeichnet, daß die Substanz mit Tertiär-Butylgruppen substituiert wird.

5. Verfahren nach einem der Ansprüche 1 bis 4, dadurch gekennzeichnet, daß die aromatische Verbindung in einer Konzentration von 0,3 bis 5 Gew.%, bevorzugt 0,5 bis 1 Gew.% zugesetzt wird.

6. Verfahren nach Anspruch 1, dadurch gekennzeichnet, daß die schwefelsäurehaltige Phase in einem Abscheider oder die Schwefelsäure durch Ionentausch abgetrennt wird.

7. Verfahren nach Anspruch 6, dadurch gekennzeichnet, daß bei Verwendung eines Ionentauschers dieser diskontinuierlich zugeschaltet wird.

8. Vorrichtung zur Durchführung des Verfahrens nach Anspruch 1 mit einer Waschsäule mit einem Zulauf für regeneriertes und einem Ablauf für beladenes Lösungsmittel und mit einer über den Ablauf mit der Waschsäule verbundenen Regeneriersäule, deren Ableitung den Zulauf zur Waschsäule bildet, dadurch gekennzeichnet, daß in der Ableitung (10) der Regeneriersäule (7) ein Trennapparat zur Abscheidung der schwefelsäurehaltigen Phase installiert ist, von dem der Zulauf (3), in den eine Leitung (11), welche mit einem Vorratsbehälter (12) für eine konzentrierte Lösung der aromatischen Verbindung verbunden ist, mündet, zur Waschsäule (2) führt.

9. Vorrichtung nach Anspruch 8, dadurch gekennzeichnet, daß der Trennapparat ein Abscheider und/oder ein Ionentauscher (18) ist, der in der Ableitung (10) der Regeneriersäule (7) angeordnet ist.

10. Vorrichtung nach Anspruch 9, dadurch gekennzeichnet, daß der Abscheider als Kessel (13) mit Trennsack (14) ausgebildet ist.

**Revendications**

1. Procédé d'élimination du $SO_2$ par lavage avec un solvant à effet physique, auquel est ajouté un composé aromatique et qui, après avoir absorbé le $SO_2$, est soumis à une régénération et est retourné au lavage, caractérisé en ce que le composé aromatique est ajouté au solvant avant le lavage, après quoi le solvant est regénéré et une phase, contenant l'acide sulfurique et formée par l'addition du composé aromatique, est séparé du solvant régénéré.

2. Procédé selon la revendication 1, caractérisé en ce qu'une substance consistant en un ou plusieurs chaînes phénoliques est ajoutée comme composé aromatique.

3. Procédé selon la revendication 2, caractérisé en ce que la substance est soumise à une substitution par des groupes alkyles.

4. Procédé selon les revendications 2 ou 3, caractérisé en ce que la substance est soumise à une substitution par des groupes butyles tertiaires.

5. Procédé selon l'une des revendications 1 à 4 caractérisé, en ce que le composé aromatique est ajouté sous une concentration de 0,3 à 5% en poids de préférence de 0,5 à 1% en poids.

6. Procédé selon la revendication 1, caractérisé en ce que la phase contenant de l'acide sulfurique est séparée dans un séparateur ou l'acide sulfurique est séparée par échange d'ions.

7. Procédé selon la revendication 6, caractérisé en ce que, lorsque l'on utilise un échangeur d'ions, celui-ci est mis en service de façon discontinue.

8. Dispositif pour la mise en oeuvre du procédé selon la revendication 1, comportant une colonne de lavage présentant une entrée pour le solvant régénéré et une sortie pour le solvant chargé et une colonne de régénération reliée à la colonne de lavage par l'intermédiaire de la sortie, la conduite de sortie de la colonne de régénération constituant l'amenée du solvant à la colonne de lavage, caractérisé en ce que zur la conduite de sortie (10) de la colonne de régénération (7) est installé un appareil de séparation pour la phase contenant l'acide sulfurique, la sortie (3) de cet appareil dans laquelle débouche une conduite (11) reliée à un réservoir (12) pour une solution concentrée du composé aromatique, étant amenée à la colonne de lavage (2).

9. Dispositif selon la revendication 8, caractérisée en ce que le dispositif de séparation est constitué par un séparateur et ou un échangeur d'ions (18) disposé sur la conduite de sortie (10) de la colonne de régénération (7).

10. Dispositif selon la revendication 9, caractérisé en ce que le séparateur est réalisé sous la forme d'un bassin (13) à sac de séparation (14).

## Claims

1. A process for removing $SO_2$ from flue gases by scrubbing with a physically active solvent to which an aromatic compound is added and which, having absorbed $SO_2$, is regenerated and returned to the scrubbing step, characterized in that the aromatic compound is added to the solvent prior to the scrubbing step whereupon the solvent is regenerated and a phase containing sulphuric acid which is formed as a result of the addition of the aromatic compound is separated from the regenerated solvent.

2. A process as claimed in Claim 1, characterised in that a substance consisting of one or more phenolic rings is added as aromatic compound.

3. A process as claimed in Claim 2, characterised in that the substance is substituted with alkyl groups.

4. A process as claimed in Claim 2 or 3, characterised in that the substance is substituted with tertiary butyl groups.

5. A process as claimed in one of the Claims 1 to 4, characterised in that the aromatic compound is added in a concentration of 0.3 to 5 weight%, preferably 0.5 to 1 weight%.

6. A process as claimed in Claim 1, characterised in that the phase containing sulphuric acid is separated in a separator or the sulphuric acid is separated by ion exchange.

7. A process as claimed in Claim 6, characterised in that when an ion exchanger is used it is connected discontinuously.

8. A device for implementing the process claimed in Claim 1, comprising a scrubbing column with an input for regenerated and an outlet for charged solvent and comprising a regenerating column which is connected via the output of the scrubbing column, and whose outlet line forms the input to the scrubbing column, characterised in that in the output line (10) of the regenerating column (7) is installed a separating apparatus which separates the phase containing the sulphuric acid and from which the input (3), which is fed with a line (11) connected to a feed container (12) for a concentrated solution of the aromatic compound, leads to the scrubbing column (2).

9. A device as claimed in Claim 8, characterised in that the separating apparatus is a separator and/or an ion exchanger (18) which is arranged in the outlet line (10) of the regenerating column (7).

10. A device as claimed in Claim 9, characterised in that the separator consists of a vessel (13) with a separating bag (14).

Fig. 1

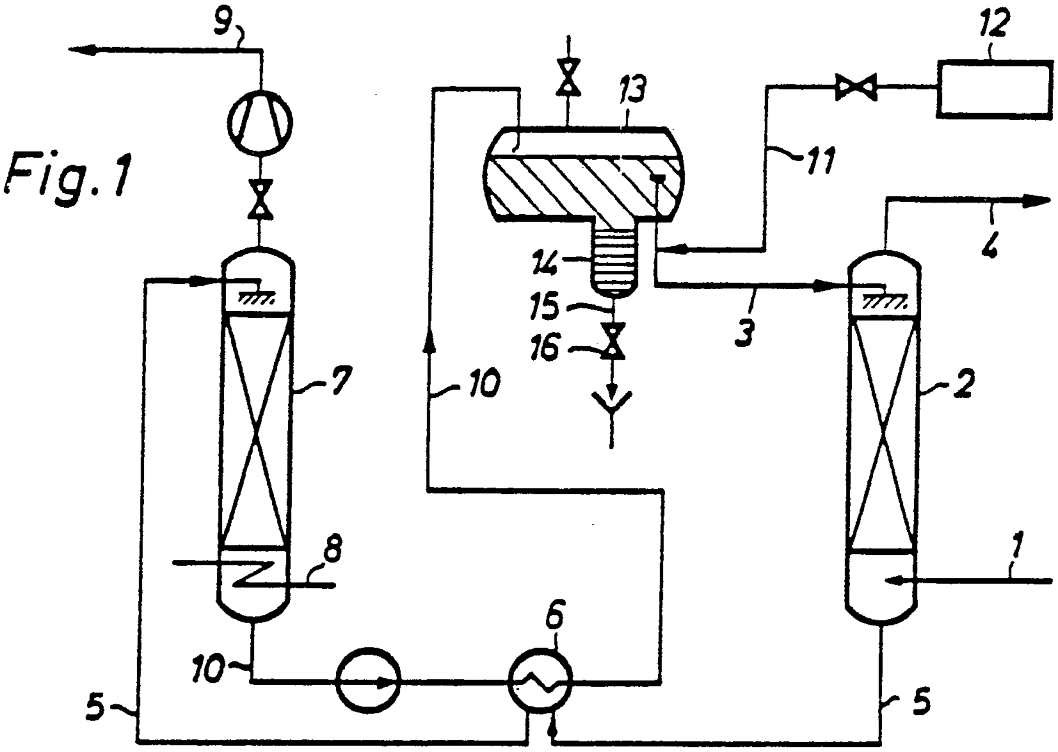
9
12
13
11
14
15
16
3
4
10
7
2
8
1
6
10
5
5

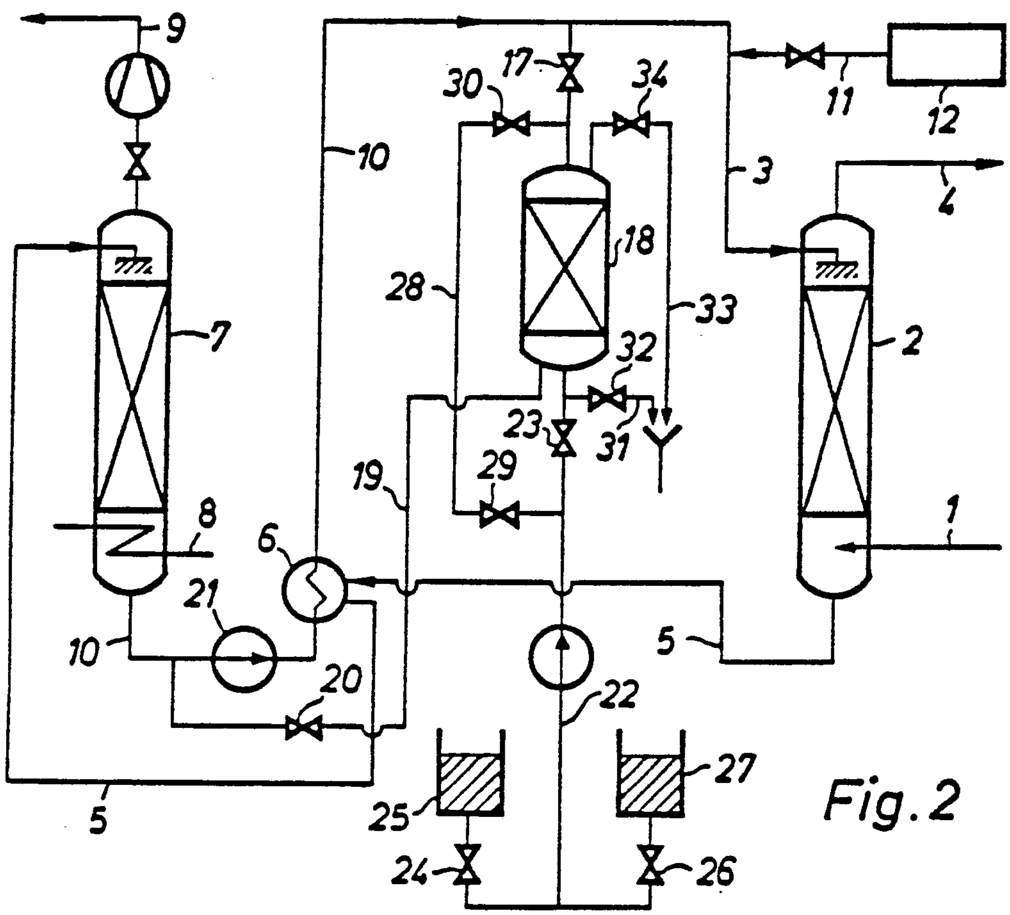
9
17
30
34
11
12
10
3
4
7
18
28
33
2
32
23
31
19
29
8
6
21
1
10
20
5
22
27
25
5
24
26

Fig. 2